Europäisches Patentamt

(19) European Patent Office

Office européen des brevets

(11) Publication number : **0 460 906 A1**

## (12) EUROPEAN PATENT APPLICATION

(21) Application number : 91305024.1

(51) Int. Cl.⁵ : **H02G 3/22**

(22) Date of filing : 03.06.91

(30) Priority : 05.06.90 GB 9012550

(43) Date of publication of application :
11.12.91 Bulletin 91/50

(84) Designated Contracting States :
DE GB SE

(71) Applicant : LYCAB LIMITED
Station Road, Facit
Whitworth, Nr. Rochdale OL12 8LN (GB)

(72) Inventor : Platt, Alan
4 Parmerstone Close
Denton, Manchester (GB)

(74) Representative : Whalley, Kevin et al
Wilson Gunn Ellis & Co. 41-51 Royal Exchange
Cross Street
Manchester M2 7BD (GB)

(54) Cable transits.

(57) A cable transit comprises a kit having two end walls (10), an intermediate wall (24) and four end walls (16). Brackets are provided at the free ends of the end walls (16). Apertures are provided on the webs (12) of the side walls (12), in the brackets (22) and in the intermediate wall (24). Nuts and bolts are used to secure the end walls (16), side walls (10) and intermediate wall (24) together.

EP 0 460 906 A1

_Fig.1_

This invention relates to cable transits and more particularly frames for cable transits.

Cable transit assemblies are used where cables pass through the wall of an enclosure in order to create a fire proof seal around the cables. A cable transit generally comprises a substantially rectangular metal frame into which a plurality of resilient blocks are fitted. The blocks are of varying size and, as appropriate, some blocks are shaped so as to fit around cables that are to pass through the transit. A compression plate is also provided which compresses the resilient blocks in order to form a tight seal between the blocks and the cables, between the blocks themselves and between the blocks and the frames. There is a practical limit to the size of a cable transit frame. So where a transit is required for a large number of cables instead of increasing the size of the frame it is the practice to use two or more frames. For ease of installation where two or more frames are required separate frames are not used, but a multiple frame which comprises a plurality of frames permanently fixed together fabricated for example by welding the parts. In order to meet the requirements of industry it is necessary to stock a large number of different multiple frame assemblies. The invention has been made from a consideration of this problem.

According to a first aspect of the present invention there is provided a cable transit comprising a frame formed from a kit comprising two flanged side walls and two flanged end walls, and fastening means for securing the side walls to the end walls.

In a preferred embodiment of the invention the fastening means comprises brackets provided on at least one of the side walls or the end walls. The brackets may be provided at or towards the ends of the said side wall or end wall. The brackets may be disposed between the web and flange of the side wall or end wall. The bracket provided on the side wall or end wall may be secured to a web of a further side wall or end wall. The bracket and the web preferably comprise apertures. The web is preferably secured to the bracket by a nut and bolt arrangement.

The kit may further comprise at least one intermediate side wall.

According to a second aspect of the present invention there is provided a multiple cable transit frame assembly formed from a kit of parts comprising two flanged side walls for the outer sides of the multiple frame assembly, one or more intermediate side walls, the number of said intermediate side walls being one less than the number of frames in the multiple frame assembly, two flanged end walls for each frame in the multiple frame assembly, brackets between the web and flange on each end wall and fastening means for securing the webs of each flanged side wall to two end walls and for securing the or each intermediate wall to four end walls.

Specific embodiments of the invention will now be described by way of example with reference to the accompanying drawings in which:-

Fig. 1 is an exploded, perspective view of a multiple frame cable transit;

Fig. 2 shows an assembled multiple frame cable transit in side elevation;

Fig. 3 shows another embodiment of a multiple frame cable transit in side elevation; and

Fig. 3A is an enlarged view of part of the multiple frame cable transit of Fig. 3.

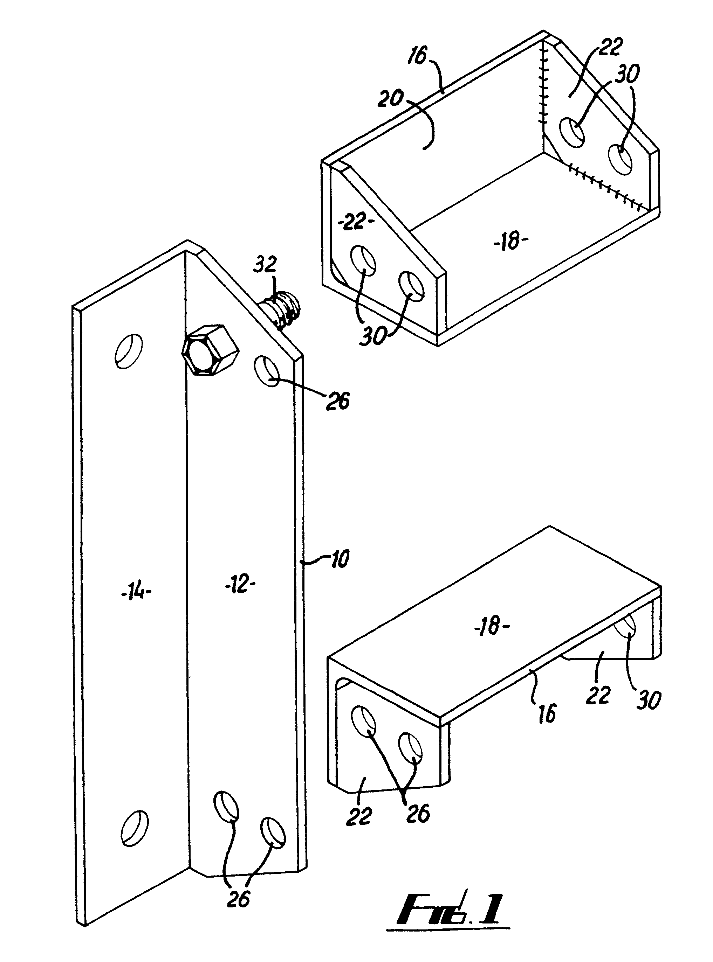

Referring to Fig. 1 a multiple frame cable transit comprises two side walls 10, each comprising a web 12 and flange 14, four end walls 16, each comprising a web 18 and flange 20 and an intermediate, unflanged, wall 24. A bracket 22 is provided at each end of each end wall 16 between web 18 and flange 20. Apertures 26 are formed at each end of the webs 12 of the side walls 10 and, at a similar spacing, apertures 28 are formed at each end of the intermediate wall 24. Apertures 30 are also provided in the brackets 22.

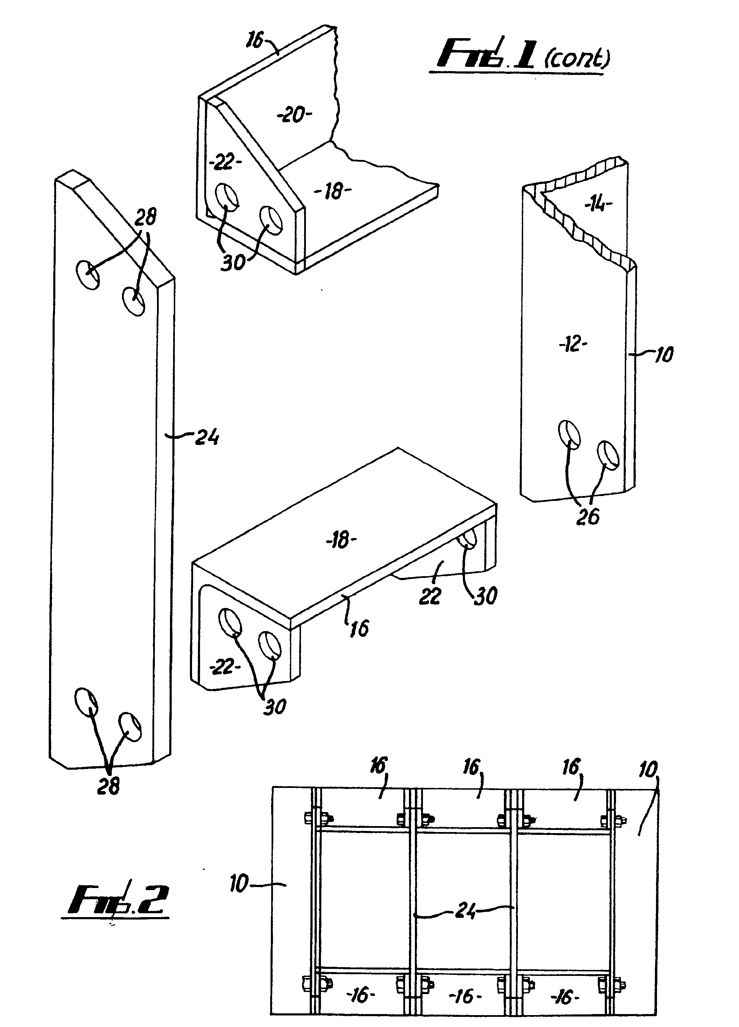

To construct the multiple frame cable transit bolts 32 are passed through the apertures 26 in the side walls 10 and apertures 30 in adjacent brackets 22 of the end walls 16 and secured by nuts. The intermediate wall 24 is similarly secured to the brackets 22 of the end walls 16 on either side thereof. An assembled multiple frame cable transit is shown in Fig. 2. As is apparent the assembly of Fig. 2 comprises three frames whereas the parts shown in Fig. 1 form a two frame assembly, an additional intermediate wall 24 and two extra end walls 16 being added to the parts shown in Fig. 1 to make the assembly of Fig. 2. With the invention, therefore, it is possible to construct single frame cable transit and a range of multiple frame cable transits from only three component parts 10,16,24. The transits can be quickly fabricated to suit customer requirements or can be assembled by the users themselves, that being useful when the transits are to be installed around cables already in position.

The above described embodiment enables the construction of a plurality of frames in a continuous row. However, by replacing one or more end walls 16 with an intermediate end wall unit which includes a second web fixed to flange 20 and parallel to, and aligned with, the first web 18, enlarging the bracket to fill the space between the two webs and providing additional apertures in the enlarged bracket additional frames can be built up on the end walls. In other words the assembly can consist of a plurality of rows of frames. To provide the enormous range of assemblies that that construction permits, only four basic component parts are needed.

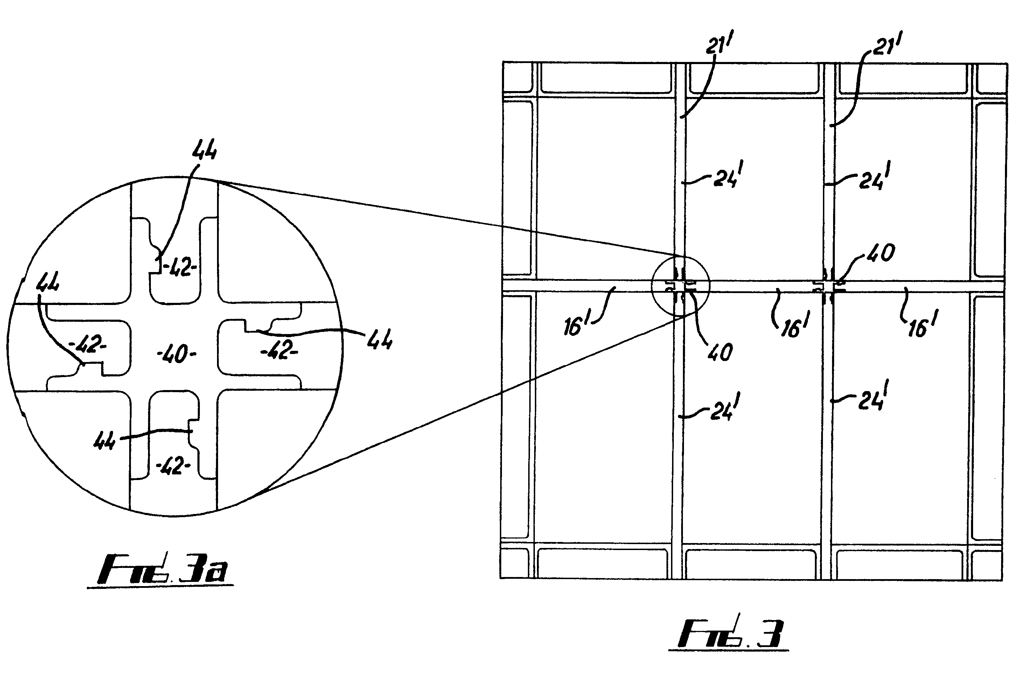

Referring now to Fig. 3 a multiple frame cable transit having a plurality of rows of frames can be assembled by means of connecting members 40 which may be a metal or plastics extrusion. Each connecting member is of cruciform section with an open ended channel 42 formed in each arm. A projection 44 is formed on one side wall of each channel. In the embodiment illustrated the arms of connecting member are identical so that it can be used in any orientation.

In order to build up a plurality of rows of frames the intermediate walls 24' are profiled at one or both ends thereof so as to match the shape of the channels in the connecting member. In addition end walls 16' which are located between adjacent rows of frames are also profiled at one or both ends. It will be appreciated that a multiple frame cable transit can be assembled quickly by fitting the profiled ends of walls 24' and 16' into the connecting members, the other parts of the assembly being connected together as described in connection with Figs. 1 and 2.

It is to be understood that the above described embodiments of the invention have been described by way of illustration only. Many modifications and variations are possible.

## Claims

1. A cable transit comprising a frame formed from a kit comprising two flanged side walls (10) and two flanged end walls (16) and fastening means (22,32) for securing the side walls (10) to the end walls (16).

2. A cable transit as claimed in claim 1, characterised in that the fastening means comprises brackets (22) provided on at least one of the side walls (10) or the end walls (16).

3. A cable transit as claimed in claim 2, characterised in that the brackets (22) are provided at or towards the ends of said side wall (10) or end wall (16).

4. A cable transit as claimed in claim 2 or claim 3, characterised in that the brackets (22) are disposed between the web (12,18) and flange (14,20) of said side wall (10) or end wall (16).

5. A cable transit as claimed in any preceding claim, characterised in that the bracket (22) provided on said side wall (10) or end wall (16) is secured to a web (12,18) of a further side wall (10) or end wall (16).

6. A cable transit as claimed in claim 5, characterised in that the bracket (22) and the web (12) comprise apertures.

7. A cable transit as claimed in claim 5 or claim 6, characterised in that the web (12) is secured to the bracket (22) by a nut and bolt (32).

8. A cable transit as claimed in any preceding claim, characterised in that the kit further comprises at least one intermediate side wall (24).

9. A multiple cable transit frame assembly formed from a kit of parts comprising two flanged side walls (10) for the outer sides of the multiple frame assembly, one or more intermediate side walls (24), the number of said intermediate side walls (24) being one less than the number of frames in the multiple frame assembly, two flanged end walls (16) for each frame in the multiple frame assembly, brackets (22) between the web and flange on each end wall (16) and fastening means (22,32) for securing the webs (12) of each flanged side wall (10) to two end walls (16) and for securing the or each intermediate wall (24) to four end walls (16).

Fig.1

FIG.1 (cont)

FIG.2

6

EP 0 460 906 A1

44

-42-

44

44

-42-

-40-

-42-

44

44

-42-

**FIG.3a**

21'

21'

24'

24'

40

16'

16'

16'

40

24'

24'

**FIG.3**

European Patent
Office

**EUROPEAN SEARCH REPORT**

Application Number

EP    91 30 5024

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 006 794 (CROUSE-HINDS CO) <br> * page 9, line 3 - line 15; figures 1-3 * <br> --- | 1 | H02G3/22 |
| Y | EP-A-271 460 (LYCAB AB) <br> * column 2, line 15 - column 4, line 35 * <br> * figures 1-4 * <br> --- | 1-8 | |
| Y | DE-A-3 610 353 (DÖPFL) <br> * page 9, line 11 - line 24 * <br> * page 5, line 1 - line 6; figure 5 * <br> --- | 1-8 | |
| A | DE-A-2 524 113 (STAUDT) <br> ----- | | |
| | | | TECHNICAL FIELDS SEARCHED (Int. Cl.5) |
| | | | H02G <br> F16L |

The present search report has been drawn up for all claims

| Place of search | Date of completion of the search | Examiner |
|---|---|---|
| THE HAGUE | 01 AUGUST 1991 | PORWOLL H.P. |

CATEGORY OF CITED DOCUMENTS

X : particularly relevant if taken alone
Y : particularly relevant if combined with another
document of the same category
A : technological background
O : non-written disclosure
P : intermediate document

I : theory or principle underlying the invention
E : earlier patent document, but published on, or
after the filing date
D : document cited in the application
L : document cited for other reasons

                              
& : member of the same patent family, corresponding
document

EPO FORM 1503 03.82 (P0401)